**Europäisches Patentamt**

**European Patent Office**

**Office européen des brevets**

(19)

(11) Veröffentlichungsnummer : **0 177 773**
**B1**

(12)

# EUROPÄISCHE PATENTSCHRIFT

(45) Veröffentlichungstag der Patentschrift :
**15.03.89**

(21) Anmeldenummer : **85111309.2**

(22) Anmeldetag : **06.09.85**

(51) Int. Cl.⁴ : **B 60 B 13/00**, F 16 F 15/32

(54) **Ausgleichsgewicht-Befestigung an einem Kraftfahrzeugrad.**

(30) Priorität : **13.09.84 DE 8426961 U**

(43) Veröffentlichungstag der Anmeldung :
**16.04.86 Patentblatt 86/16**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
EP--A-- 0 062 130
DE--A-- 2 522 149
GB--A-- 1 418 627
US--A-- 3 891 276

(73) Patentinhaber : **INTERNATIONAL TECHNICAL RESEARCH S.A.H.**
**17, Rue Nicolas Martha**
**L-2133 Luxembourg (LU)**

(72) Erfinder : **Thissen, Werner P.**
**Weseler Strasse 1**
**D-4180 Goch 1 (DE)**
Erfinder : **Schillings, Karl H.**
**Burfkamp 21**
**D-4180 Goch 6 (DE)**

(74) Vertreter : **Brehm, Hans-Peter, Dr. Dipl.-Chem. et al**
**Patentanwälte Kern, Brehm & Partner Albert-Rosshaupter-Strasse 73**
**D-8000 München 70 (DE)**

**Beschreibung**

In allgemeiner Hinsicht betrifft die Erfindung die Befestigung von Ausgleichsgewichten an einem Kraftfahrzeugrad.

Insbesondere betrifft die Erfindung die Ausgleichsgewicht-Befestigung an einem Kraftfahrzeugrad mit einer Radfelge mit Radschüssel, Felgenbett und Felgenhorn, an der im Bereich des Felgenhorns zwischen Felgenbett und Radschüssel eine umlaufende, nach außen offene Nut zur Aufnahme der Ausgleichsgewichte ausgespart ist.

Ein weiterer Gesichtspunkt der Erfindung betrifft ein Befestigungssystem mit dieser Radfelge und angepaßten Ausgleichsgewichten.

Zur Beseitigung einer Unwucht, die nach Aufziehen des Reihens auf der Felge, nach ungleichmäßiger Reifenabnutzung und dergleichen auftreten kann, müssen Kraftfahrzeugräder ausgewuchtet werden. Typischerweise werden hierzu Ausgleichsgewichte verwendet, die unter dem Felgenhorn angeordnet und dort mit einer das Felgenhorn übergreifenden Klammer befestigt werden. Nach einer alternativen Möglichkeit können die Ausgleichsgewichte im Bereich des Felgenhorns geklebt werden. Sofern sich nach unterschiedlicher Abnutzung die Massenverhältnisse des Rades ändern, muß auch Größe und Anordnung der Ausgleichsgewichte erneut angepaßt werden. Dazu müssen die alten Ausgleichsgewichte entfernt und neue Ausgleichsgewichte angebracht werden. Mit den herkömmlichen Maßnahmen zur Ausgleichsgewicht-Befestigung lassen sich hierbei Beschädigungen der Felge in der Praxis kaum vermeiden.

Weiterhin stört die Sichtbarkeit der Ausgleichsgewichte den optischen Eindruck der Radfelge, insbesondere wenn es sich dabei um eine aufwendigere Leichtmetall-Zierfelge handelt.

Die britische Patentschrift 1 418 627 offenbart eine Radfelge mit Radschüssel, Felgenbett und Felgenhorn, an der im Bereich des Felgenhorns zwischen Felgenbett und Radschüssel eine umlaufende, nach außen offene Nut zur Aufnahme der Ausgleichsgewichte ausgespart ist. Um eine Beeinträchtigung des optischen Eindrucks durch die Anwesenheit der Ausgleichsgewichte zu vermeiden, wird empfohlen, die Radfelge selbst mit einem glänzenden oder polierten Finish zu versehen, demgegenüber die Nut dunkel zu halten, und auch die Ausgleichsgewichte mit der gleichen dunklen Farbe zu versehen, um auf diese Weise die Ausgleichsgewichte innerhalb der Nut zu tarnen. Die Befestigung der Ausgleichsgewichte innerhalb der Nut kann kraftschlüssig durch Verformung des Gewichtmaterials erfolgen oder es kann eine Klammer vorgesehen werden, die einerseits am Ausgleichsgewicht befestigt ist und andererseits über die Nut herausragt und das Felgenhorn umgreift. In jedem Fall kann die Ausgleichsgewicht-Befestigung zu einer Beschädigung der Radfelge führen, und die erneute Befestigung eines Ausgleichsgewichtes an der gleichen Stelle ist problematisch. Bei der letzteren Art der Ausgleichsgewicht-Befestigung besteht darüberhinaus stets die Gefahr, daß durch Fremdeinwirkung, etwa in einer Waschanlage oder durch Berührung der Felge mit einer Bordsteinkante der Klammersitz gelockert wird, und das Ausgleichsgewicht verloren geht, auch wenn es in einer Nut untergebracht ist.

Davon ausgehend, besteht die Aufgabe der vorliegenden Erfindung darin, das Anbringen und Auswechseln der Ausgleichsgewichte zu vereinfachen und auch nach mehrfacher Auswuchtung an der gleichen Stelle jegliche Beschädigung der Felge zu vermeiden. Zusätzlich soll bei einer Ausgleichsgewicht-Befestigung der oben angegebenen Art jegliche Beeinträchtigung des optischen Eindruckes der Radfelge, insbesondere einer Leichtmetall-Zierfelge durch die Anwesenheit der Ausgleichsgewichte und deren Befestigungseinrichtung vermieden werden.

Ein weiteres Ziel der Erfindung besteht darin, ein Befestigungssystem für Ausgleichsgewichte an einer Radfelge bereitzustellen, das zusätzlich angepaßte Ausgleichsgewichte umfaßt, die an beliebiger Stelle innerhalb der an der Radfelge ausgesparten Nut leicht auswechselbar festlegbar sind, ohne die Nut und/oder die Radfelge zu beschädigen.

Weitere Ziele, Vorteile und Besonderheiten der Erfindung ergeben sich aus Beschreibung und Ansprüchen mit Bezugnahme auf die Zeichnungen.

Ausgehend von einer Ausgleichsgewicht-Befestigung an einem Kraftfahrzeugrad mit den oben angegebenen Merkmalen ist die erfindungsgemäße Lösung dieser Aufgabe und Ziele dadurch gekennzeichnet, daß zusätzlich eine ringförmige Abdeckung für die Nut und die gegebenenfalls darin angeordneten Ausgleichsgewichte vorhanden ist, und diese ringförmige Abdeckung über Befestigungsmittel lösbar an der Radfelge festklemmbar ist.

Insbesondere kann es sich bei der Radfelge um eine Leichtmetall-Zierfelge mit flachem Felgenhorn handeln, und die daran angepaßte Ausführungsform der Erfindung weist eine ringförmige Abdeckung mit winkelförmigem Querschnittsprofil auf, mit einem ersten, relativ breiten, die Nut abdeckenden, sich in radialer Richtung erstreckenden Schenkel und einem zweiten, relativ schmalen, am Innen- oder Außenumfang angeordneten, sich in axialer Richtung erstreckenden Schenkel. Als Befestigungsmittel dient hier vorzugsweise ein an der Innenseite des zweiten Schenkels angeformter, umlaufender Vorsprung, der — unter elastischer Verformung der Abdeckung — in eine ringförmige Aussparung an der Innen- oder Außenseite des Felgenhorns einzugreifen vermag.

Ein weiterer Gesichtspunkt der Erfindung betrifft ein Befestigungssystem für Auswuchtgewichte an einem Kraftfahrzeugrad. Zusätzlich zu einer Radfelge mit den oben angegebenen Merkmalen und der erfindungsgemäß vorgesehenen, bestimmt ausgebildeten, ringförmigen Abdeckung sind angepaßte Auswuchtgewichte vorhanden, die in der innerhalb der Radfelge ausgesparten Nut leicht auswechselbar festlegbar sind. Diese Auswuchtgewichte sind vorzugsweise als Ringsegmente ausgebildet und weisen einen an die Nutabmessungen angepaßten Querschnitt und einen entsprechenden Ringdurchmesser auf. Besonders bevorzugt weisen diese, als angepaßte Ringsegmente ausgebildeten Ausgleichsgewichte längs eines Randes ein Reibschlußmaterial auf, um ohne zusätzlich Befestigungsmittel einen leicht lösbaren und dennoch festen Sitz an der vorgesehenen Stelle innerhalb der Nut zu gewährleisten.

Die ringförmige Abdeckung überdeckt die Nut in der Radfelge und verbirgt die Ausgleichsgewichte. Selbst wenn solche Ausgleichsgewichte vorhanden sind, sind sie für einen Betrachter nicht sichtbar und können den optischen Eindruck der Felge nicht beeinträchtigen. Insbesondere kann bei einer Leichtmetall-Zierfelge die sichtbare Seite der ringförmigen Abdeckung mit der restlichen Felgenoberseite fluchten, so daß auch diese Abdeckung praktisch nicht zu erkennen ist. Ferner ist dadurch eine glattflächige Oberflächenkontur der Felgenaußenseite realisierbar, die dem heutigen Bestreben nach cW-Wert-Optimierung entgegenkommt. Die sichtbare Rückseite der ringförmigen Abdeckung bildet eine Sichtblende, die vom Material und/oder der Optik her in das Design der Radfelge integriert sein kann. Die von dieser Sichtblende verdeckten Ausgleichsgewichte können — ohne jegliche Beschädigung von Nut und/oder Felge — einfach und schnell innerhalb der Nut festgelegt und bei Bedarf ausgewechselt werden. Somit erlaubt die Erfindung eine einfache, schnelle und wiederholte Auswuchtung eines Kraftfahrzeugrades, ohne den optischen Eindruck der Radfelge, insbesondere einer Leichtmetall-Zierfelge zu stören. Praktisch wird eine unsichtbare Ausgleichsgewicht-Befestigung geschaffen.

Weitere vorteilhafte Ausgestaltungen und Weiterbildungen der Erfindung betreffen die Ausbildung und die Befestigung der ringförmigen Abdeckung an der Radfelge, sowie spezielle, angepaßte Ausgleichsgewichte, wie das im einzelnen in den Unteransprüchen angegeben ist.

So kann im Bereich des Felgenhorns, nämlich zwischen Felgenbett und Radschüssel, eine umlaufende Ausnehmung an der Radfelge zum Eingriff der/des Befestigungsmittel(s) ausgespart sein. Das oder die Befestigungsmittel ist/sind vorzugsweise am Außenumfang der ringförmigen Abdeckung angebracht, und zum Festklemmen der Abdeckung an der Radfelge wird — unter geringfügiger elastischer Verformung der ringförmigen Abdeckung das/die Befestigungsmittel in diese Ausnehmung hineingedrückt. Solche Befestigungsmittel können beispielsweise Federzungen sein, die in Abständen zueinander längs des Außenumfanges einer in wesentlichen ebenen ringförmigen Abdeckung angebracht sind und mit ihrem federnden Schenkel in eine passende umlaufende Aussparung an der Radfelge eingreifen.

Vorzugsweise ist am Innen- oder Außenumfang der ringförmigen Abdeckung einstückig ein umlaufender Flansch angeformt, und als Befestigungsmittel dienen ein oder mehrere, von der Innenseite dieses Flansches vorstehende Vorsprünge. Hierbei kann es sich um einen einzigen, umlaufenden Vorsprung handeln, oder um mehrere, im Abstand zueinander angeordnete Vorsprungabschnitte.

Der umlaufende Vorsprung kann beispielsweise keilförmigen Querschnitt aufweisen und in eine angepaßte, keilförmige Ausnehmung im Bereich des Felgenhorns einrasten, so daß ein sogenannter Uhrdeckelverschluß realisiert wird.

Bei Bedarf kann in die ringförmige Ausnehmung ein elastisches Dichtungsmittel wie etwa ein Gummiband oder dergleichen eingelegt sein. Hierdurch wird ein federnder, elastisch gehaltener Sitz der ringförmigen Abdeckung an der Radfelge gewährleistet, und das Eindringen von Schmutz in die Nut verhindert.

An der zur Ausnehmung entfernten Innenwand der Nut kann eine umlaufende Stufe ausgespart sein, in welcher ein Randabschnitt der ringförmigen Abdeckung abstützbar ist. Vorzugsweise entspricht die Höhe dieser Stufe der Materialstärke der Abdeckung, so daß ein fluchtender, kaum wahrnehmbarer Übergang zwischen der Abdeckung und der restlichen Felgenoberfläche geschaffen wird.

Nach einer anderen Alternative ist die Abdeckung als ebener, ringförmiger Scheibenabschnitt ausgebildet, und zu deren Befestigung an der Radfelge sind eine Anzahl Klemmelemente vorgesehen, die über den Ringumfang verteilt im Abstand zueinander angebracht oder angeformt sind und an der Radfelge festklemmbar sind. Solche Klemmelemente können beispielsweise als Federbügel ausgebildet sein, die in den von den beiden umgebogenen Rändern der Abdeckung gebildeten Hohlkehlen gehalten werden und in Ausnehmungen an der Radfelge eingreifen, etwa in die Nut zur Aufnahme der Ausgleichsgewichte oder in eine dazu parallele umlaufende Ausnehmung. Alternativ können als Klemmelemente Klemmstücke aus Gummi oder einem anderen elastisch verformbaren Material dienen, deren Abmessungen das Nutquerschnittsprofil geringfügig übersteigen, so daß nach dem Eindrücken dieser Klemmstücke in die Nut ein sicherer Reibschluß erhalten wird. Derartige Klemmstücke können an der Innenseite der Abdeckung angeklebt oder sonstwie befestigt sein.

Nach einer weiteren Alternative können als Klemmelemente Stanzfalten oder nach innen geklappte Ausstanzungen der ringförmigen Abdeckung dienen, die federnd in einer oder mehrere passende Ausnehmung(en) an der Radfelge eingreifen. Damit auch in diesem Falle die Abdeckung eine optisch ansprechende Sichtblende bildet, ist die ringförmige Abdeckung vorzugsweise zwei- oder mehrschichtig ausgebildet, und lediglich die innere Schicht oder die inneren Schichten weist/weisen diese Stanzfalten oder Ausstanzungen auf. Die äußere Schicht ist durchgehend bzw. ununterbrochen ausgebildet und dient als die Nut überdeckende Sichtblende.

Um den Sitz der Klemmelemente, beispielsweise in Form der genannten Federbügel, Gummiklötze, Stanzfalten, nach innen geklappten Ausstanzungen oder dergleichen zu erhöhen, kann wenigstens eine Wand der Nut, vorzugsweise deren Außenwand eine Hinterschneidung aufweisen, und die Klemmelemente besitzen angepaßtes Profil. Dadurch kann ein noch sicherer Klemmsitz gewährleistet werden, der die ringförmige Abdeckung an die Radfelge heranzieht. Trotzdem kann durch Ansetzen eines Werkzeuges wie eines Schraubenziehers oder dergleichen die ringförmige Abdeckung bei Bedarf ohne weiteres von der Radfelge gelöst werden, beispielsweise wenn Anordnung und/oder Anzahl der Ausgleichsgewichte geändert werden soll.

Die Anordnung der Nut ist an beliebiger Stelle zwischen Felgenbett und Radschüssel möglich. Vorzugsweise wird eine Anordnung gewählt, die einen möglichst großen Ringdurchmesser der Nut erlaubt, einen leichten Zugang zur Nut ermöglicht und die Nut zusammen mit der erfindungsgemäßen Abdeckung in das Felgendesign integriert.

Für die Nut in der Radfelge hat sich ein im wesentliches rechteckiges Profil bewährt, wobei die Nutbreite die Nuttiefe übersteigt. Der Übergang von den Nutwänden zum Nutgrund kann abgerundet sein, um die Lackierung zu erleichtern und die Korrosionsanfälligkeit zu vermindern. Typischerweise kann die Nut eine Breite von etwa 10 bis 20 mm aufweisen. Damit die ringförmige Abdeckung eine solche Nut vollständig überdeckt, soll die Ringbreite der ringförmigen Abdeckung vorzugsweise etwa 12 bis 25 mm betragen. Typischerweise schließen sich dann in Richtung nach innen auf die Radachse zu an dem, die Nut aufweisenden Felgenabschnitt radial ausgerichtete Stege an, die in das Profil der Radschüssel übergehen. Eine ringförmige Abdeckung mit den genannten Abmessungen bildet den äußeren Rand einer solchen, profilierten Leichtmetall-Zierfelge und trägt zu deren optischen Eindruck bei.

Die Auswahl der Materialien für die ringförmige Abdeckung ist nicht besonders beschränkt. Beispielsweise kann diese Abdeckung aus metallischem Material, etwa dünnem Blech aus nichtrostendem Stahl bestehen ; weiterhin kann diese Abdeckung aus Leichtmetall, beispielsweise Aluminium oder einer Aluminiumlegierung bestehen ; solche Leichtmetall-Abdeckungen kommen insbesondere in Verbindung mit einer Leichtmetall-Zierfelge in Betracht. Vorteilhafter Weise sollen Radfelge und Abdeckung aus dem gleichen metallischen Material bestehen, um Korrosion fördernde Lokalelemente zu vermeiden. Weiterhin kann die Abdeckung aus einem dauerhaften Kunststoff bestehen. Bei Bedarf kann der gesamte Kunststoffring oder zumindest dessen sichtbare Oberfläche mit einer dünnen Metallbeschichtung versehen sein, die an das Aussehen der Felge angepaßt ist. Ferner kann die Abdeckung zwei- oder mehrschichtig ausgebildet sein, insbesondere, wenn Abschnitte der inneren Schicht(en) als Befestigungsmittel für die Abdeckung an der Radfelge dienen.

Wie bereits oben angedeutet, dienen zum Auswuchten des Kraftfahrzeugrades vorzugsweise angepaßte Ausgleichsgewichte, die in der innerhalb der Radfelge ausgesparten Nut festlegbar sind. Hierzu können im Handel befindliche Klebegewichte dienen die auf einer Hauptfläche mit einem durch eine abziehbare Folie geschütztem Klebemittel versehen sind. Soweit erforderlich werden diese handelsüblichen Klebegewichte von Hand an die Nutabmessungen angepaßt. Vorzugsweise sind diese Auswuchtgewichte als Ringsegmente ausgebildet, die in an sich bekannter Weise aus Blei oder einer Bleilegierung bestehen. Durchmesser und Querschnittsprofil der Ringsegmente sind an die Nutabmessungen angepaßt, so daß die Ringsegmente innerhalb der Nut unterbringbar sind, ohne die Anbringung der ringförmigen Abdeckung zu behindern.

Vorzugsweise weisen die erfindungsgemäß vorgesehenen Ringsegmente in regelmäßigen Abständen in radialer Richtung verlaufende Sollbruchstellen auf. Durch entsprechende Anordnung dieser Sollbruchstellen kann jedes Ringsegment aus einem Satz mehrerer, miteinander verbundener, unterschiedlich schwerer Einzelgewichte bestehen. In der Praxis werden häufig Ausgleichsgewichte mit einem Gewicht von etwa 30 bis 50 g benötigt. Um eine möglichst weitgehende Anpassung an das zum Auswuchten tatsächlich benötigte Ausgleichsgewicht zu ermöglichen, können beispielsweise mehrere Einzelgewichte mit jeweils 2, 5 und 10 g vorgesehen werden. Mit derartigen Ausgleichsgewichten ist eine genauere Auswuchtung als mit den bislang verfügbaren Auswuchtgewichten möglich.

Zur Festlegung der Ringsegmente innerhalb der Nut können die jeweiligen Abmessungen so aneinander angepaßt sein, daß die Ringsegmente praktisch spielfrei in die Nut einsetzbar sind. An den beiden Stirnwänden eines Ringsegmentes wird dann ein Klötzchen aus Gummi oder anderem elastischem Material, dessen Profil die Nutabmessungen geringfügig übersteigt, in die Nut gedrückt und hält das Ringsegment sicher an der vorgesehenen Stelle.

Alternativ kann der aus Blei oder dergleichen bestehende Bestandteil des Ringsegmentes schmäler als die Nut ausgebildet sein, und an wenigstens einer Umfangswand eines solchen Ringsegmentes befindet sich ein, den Reibschluß mit der Nut erhöhendes Material. Als solches Reibschlußmaterial kann beispielsweise ein gezacktes oder gezahntes Band aus Gummi oder anderem elastisch verformbaren Kunststoff dienen, das an einer Umfangswand, vorzugsweise der Außenwand der Ringsegmente angebracht, vorzugsweise angeklebt ist.

Sofern eine Seitenwand der Nut, vorzugsweise deren Außenwand eine Hinterschneidung aufweist, soll auch die entsprechende Umfangswand der Ringsegmente, das dort angebrachte Reibschlußmaterial und/oder die Klötzchen zum Festhalten der Ringsegmente ein an diese Hinterschneidung angepaßtes Profil aufweisen.

Mit dieser Kombination einer bestimmt ausgebildeten Radfelge mit einer im Bereich des Felgenhorns zwischen Felgenbett und Radschüssel ausgesparten, umlaufenden Nut, sowie mit einer angepaßten, diese Nut überdeckenden, und an der Radfelge festklemmbaren, ringförmigen Abdeckung und mit diesen angepaßten Ausgleichsgewichten schafft die Erfindung ein Befestigungssystem für Ausgleichsgewichte an einer Radfelge, das eine einfache, schnelle und optisch ansprechende Anbringung dieser Ausgleichsgewichte an einem Kraftfahrzeugrad erlaubt. Die Ausgleichsgewichte befinden sich innerhalb der an der Radfelge ausgesparten Nut und die ringförmige Abdeckung deckt sowohl die Nut wie die gegebenenfalls darin befindlichen Ausgleichsgewichte ab, so daß der optische Eindruck der Radfelge, insbesondere einer Leichtmetall-Zierfelge nicht gestört wird. Eine wiederholte Anbringung eines Ausgleichsgewichtes an der gleichen Stelle des Felgenhorns ist möglich, ohne die Felge an dieser Stelle zu beschädigen. Weiterhin hat die praktische Erfahrung gezeigt, daß mit diesem Befestigungssystem eine schnellere Auswuchtung als mit den bekannten, über eine Klammer am Felgenhorn zu befestigenden Ausgleichsgewichten möglich ist, weil sich Korrekturen einfacher durchführen lassen. Das erfindungsgemäße Befestigungssystem für Ausgleichsgewichte ist sowohl für die statische wie für die dynamische Auswuchtung geeignet. Die ansonsten für das statische Auswuchten typische Anbringung der Ausgleichsgewichte an der Innenseite der Felge kann unter Umständen unterbleiben, so daß dort der Raum für andere Einrichtungen, beispielsweise für das Lenkgestänge, Sensoren und dergleichen zur Verfügung steht.

Nachstehend wird die Erfindung mehr im einzelnen, anhand bevorzugter Ausführungsformen mit Bezugnahme auf die Zeichnungen erläutert ; die letzteren zeigen :

Fig. 1 Ausschnittsweise in einer schematischen Schnittdarstellung den Randabschnitt einer Leichtmetall-Zierfelge mit angrenzendem Reifenwulst ;

Fig. 2 in vergrößerter Darstellung den Ausschnitt II nach Figur 1 ;

Fig. 3 eine schematische Schnittdarstellung einer Radfelge mit verschiedenen Möglichkeiten zur Anordnung der Nut und der ringförmigen Abdeckung zwischen Felgenbett und Radschüssel ;

Figuren 4a u. 4b eine alternative Ausführungsform für Ausbildung und Befestigung einer ringförmigen Abdeckung ;

Fig. 5 eine weitere alternative Ausführungsform für Ausbildung und Befestigung einer ringförmigen Abdeckung ;

Figuren 6a, 6b, 6c noch eine weitere alternative Ausführungsform für Ausbildung und Befestigung einer ringförmigen Abdeckung ;

Fig. 7 eine erste Ausführungsform eines Ausgleichsgewichtes ; und

Fig. 8 eine zweite Ausführungsform eines Ausgleichsgewichtes.

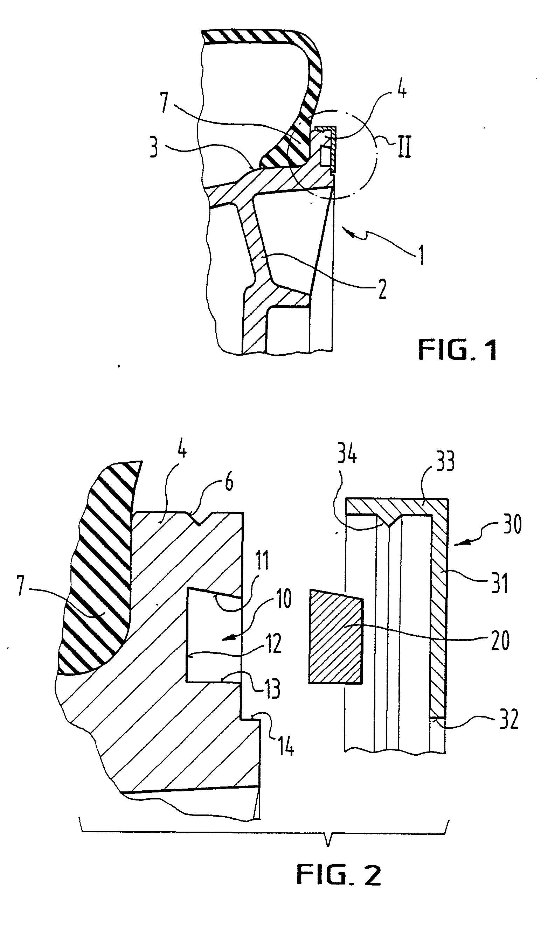

Mit Bezugnahme auf die Figuren 1 und 2 wird nachstehend eine erste Ausführungsform der Erfindung erläutert.

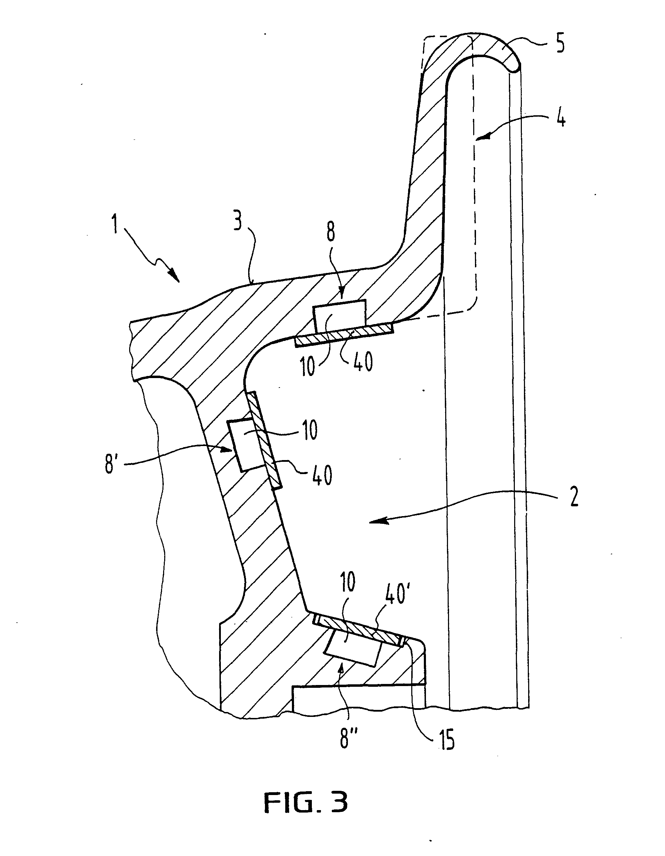

Die ausschnittsweise dargestellte Radfelge 1 weist benachbart zur Radachse eine Radschüssel 2 und am Außenrand ein Felgenhorn 4 auf. An das Felgenhorn 4 schließt das Felgenbett 3 an, an dem am fertig montierten Kraftfahrzeugrad ein Wulst 7 eines Reifens anliegt. In der dargestellten Form weist die Felge 1 ein flaches Felgenhorn 4 auf ; alternativ könnte das Felgenhorn auch mit einer umlaufenden Abbiegung 5 versehen sein, wie das aus Fig. 3 ersichtlich ist.

Wie insbesondere aus Fig. 2 ersichtlich, ist im Bereich des Felgenhornes 4 eine umlaufende, nach außen offene Nut 10 ausgespart, die zur Aufnahme von Ausgleichsgewichten 20 dient, die in bestimmter Menge an einer bestimmten Stelle innerhalb der Nut 10 festgelegt werden, um eine, nach bekannten Verfahren festgestellte Umwucht des Kraftfahrzeugrades auszugleichen. Im Rahmen der vorliegenden Erfindung ist eine bestimmt ausgebildete, ringförmige Abdeckung 30 vorgesehen, um diese Nut 10 und die gegebenenfalls darin angeordneten Ausgleichsgewichte 20 abzudecken. Auf diese Weise schafft die Erfindung eine « unsichtbare » Ausgleichsgewicht-Befestigung, bei der weder die Ausgleichsgewichte 20 noch irgendwelche Ausnehmungen zu deren Unterbringung und/oder Befestigungsmittel sichtbar sind.

Die ringförmige Abdeckung 30 ist als geschlossener Ring ausgebildet und weist ein winkelförmiges Querschnittsprofil auf, mit einem ersten, relativ breiten, die Nut 10 abdeckenden, sich in radialer Richtung erstreckenden Schenkel 31 und mit einem zweiten, relativ schmalen, am Außenumfang angeordneten, sich in axialer Richtung erstreckenden Schenkel 33. An der Innenseite des zweiten Schenkels 33 ist ein Befestigungsmittel angeformt, nämlich ein nach innen vorstehender Vorsprung 34. Dieser Vorsprung 34 kann sich ununterbrochen längs des gesamten Innenumfangs des zweiten Schenkels 33 erstrecken oder lediglich aus einigen, im Abstand zueinander angeordneten Vorsprungabschnitten bestehen. Solche Vorsprungsabschnitte können beispielsweise durch einige Stanzkerben am zweiten Schenkel 33 erzeugt werden. Vorzugsweise weist dieser Vorsprung 34 ein keilförmiges Querschnittsprofil auf. Nachdem die ringförmige Abdeckung 30 in einer die Nut 10 überdeckenden Weise am Felgenhorn 4 zur Anlage gebracht worden ist, vermag der Vorsprung 34 in eine umlaufende Ausnehmung 6 einzugreifen, die an der Außenseite des Felgenhorns 4 ausgespart ist. Wie dargestellt, ist das Profil der Ausnehmung 6 an das Querschnittsprofil des Vorsprunges 34 angepaßt. Bei Bedarf kann ein — nicht dargestelltes —

Dichtungsmittel in die Ausnehmung 6 eingelegt sein.

Die zur Aufnahme der Ausgleichsgewichte 20 bestimmte Nut 10 weist vorzugsweise ein von den Nutwänden 11 und 13, sowie dem Nutgrund 12 begrenztes, im wesentlichen rechteckiges Querschnittsprofil auf. Anstelle des dargestellten, winkelförmigen Übergangs zwischen dem Nutgrund 12 und den Nutwänden 11 und 13 könnten diese Übergänge auch abgerundet ausgeführt sein, um die Lackierung zu erleichtern und die Korrosionsanfälligkeit zu vermindern. Wie dargestellt verläuft die äußere Nutwand 11 unter einem Winkel zur axialen Richtung, so daß eine Hinterschneidung resultiert. Am Übergang zwischen der inneren Nutwand 13 zur Felgenoberfläche ist eine umlaufende Stufe 14 ausgespart, in welche das freie Ende 32 des ersten Schenkels 31 der ringförmigen Abdeckung 30 paßt, nachdem diese am Felgenhorn 4 angelegt worden ist.

Bei einer bevorzugten Ausführungsform ist an einer Leichtmetall-Zierfelge aus Aluminium oder einer Aluminium-Legierung im Bereich des Felgenhorns 4 eine umlaufende Nut 10 mit einer Nutbreite von etwa 10 bis 20 mm und einer Nuttiefe von etwa 4 bis 8 mm ausgespart. Als Sichtblende für diese Nut 10 und die gegebenenfalls darin angeordneten Ausgleichsgewichte 20 dient eine ringförmige Abdeckung 30 aus Aluminium oder einer Aluminiumlegierung, deren erster Schenkel eine Breite von etwa 12 bis 25 mm aufweist ; für den zweiten Schenkel 33 ist vorzugsweise eine Breite von etwa 6 bis 15 mm vorgesehen.

Die Nut 10 ist an der Radfelge 1 im Bereich des Felgenhornes 4 zwischen Felgenbett 3 und Radschüssel 2 ausgespart. Je nach Design der Felge 1 und/oder Form des Felgenhornes 4 bestehen verschiedene Möglichkeiten der Anordnung der Nut 10, wie das beispielsweise in Fig. 3 dargestellt ist. Anstelle der in den Fig. 1 und 2 dargestellten, Ausführungsform, mit einer abgewinkelten, das Felgenhorn 4 umgreifenden, ringförmigen Abdeckung 30 bei welcher die Nut 10 benachbart zum Außenumfang des Felgenhorns 4 ausgespart ist, könnte die Nut 10 auch längs engerer Kreise 8, 8' oder 8" ausgespart sein. Hierbei verläuft der Kreis 8 etwa in Höhe des Felgenbettes 3, der Kreis 8' im Übergangsbereich zwischen Radschüssel 2 und Felgenhorn 4 und der Kreis 8" im Bereich der Radschüssel 2. In jedem Falle ist die jeweilige Nut 10 durch eine ringförmige, ebene oder an das Felgenprofil angepaßte Abdeckung 40 abgedeckt, die auf der Felgenoberfläche aufliegen kann oder versenkt angeordnet sein und mit der Felgenoberfläche fluchten kann, wie das für die ringförmige Abdeckung 40' im Bereich des Kreises 8" dargestellt ist. Im letzteren Falle ist im Felgenmaterial nicht nur die Nut 10 zur Aufnahme der Ausgleichsgewichte ausgespart, sondern zusätzlich eine daran angepaßte Ausnehmung 15 zur Aufnahme der ringförmigen Abdeckung 40'.

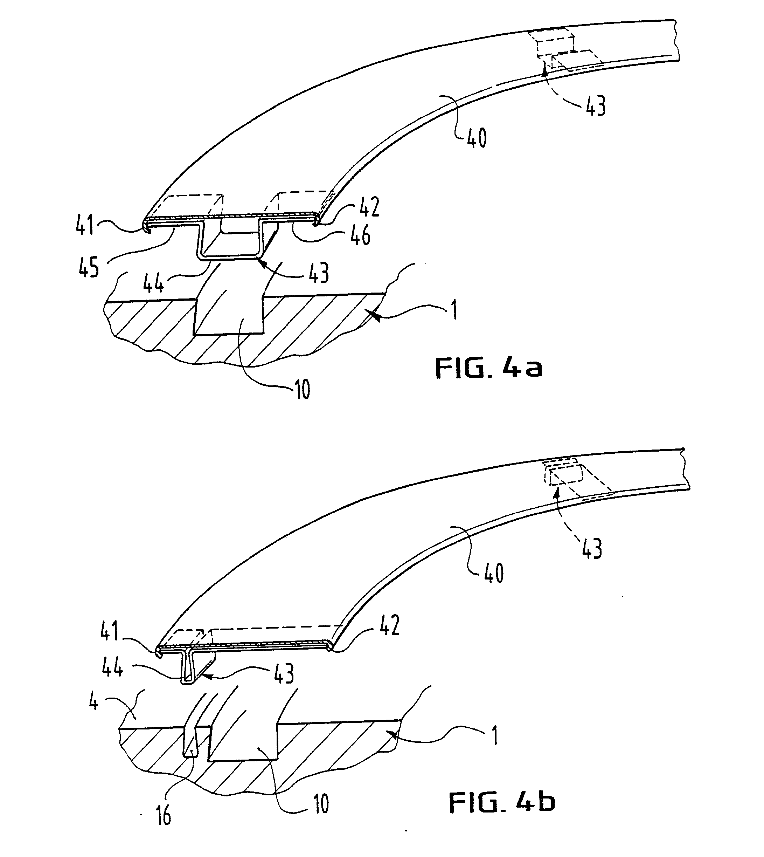

Insbesondere für die, aus einem ebenen, ringförmigen Scheibenabschnitt bestehende Abdeckung 40 kann eine alternative Form der Befestigung vorgesehen sein, wie sie mit den Fig. 4a und 4b dargestellt ist. An einer Hauptfläche der im wesentlichen ebenen, ringförmigen Abdeckung 40 sind in regelmäßigen Abständen zueinander um den Ring der Abdeckung 40 herum verteilt eine Anzahl federnder Klemmelemente angeformt oder angebracht, die an der Radfelge 1 festlegbar sind. Beispielsweise können diese Klemmelemente als Federbügel 43 aus Federstahl oder einem anderen federelastischen Material ausgebildet sein, deren gegenüberliegende Endabschnitte 45 und 46 sich in je einer Hohlkehle abstützen, die von den umgebogenen Längsrändern 41 und 42 der Abdeckung 40 gebildet wird. Jeder Federbügel 43 weist einen einstückig angeformten Klemm- oder Haftabschnitt 44 auf, der in eine passende Ausnehmung an der Radfelge eingreifen und sich dort festkrallen kann. Beim Federbügel 43 nach Fig. 4a weist der Klemm- oder Haftabschnitt eine an das Profil der Nut 10 angepaßte Form auf und wird innerhalb dieser Nut 10 federnd festgelegt. Eine solche Ausführungsform ist vorzugsweise vorgesehen. Alternativ weist, der Federbügel 43 nach Fig. 4b einen relativ schmalen, schwalbenschwanz-förmigen Klemm- oder Haftabschnitt 44 auf, der benachbart zum äußeren Ende 45 ausgebildet ist, und in eine umlaufende Aussparung 16 eingreifen kann, die im Bereich des Felgenhornes 4 im Abstand zur Nut 10 an der Radfelge 1 ausgespart ist.

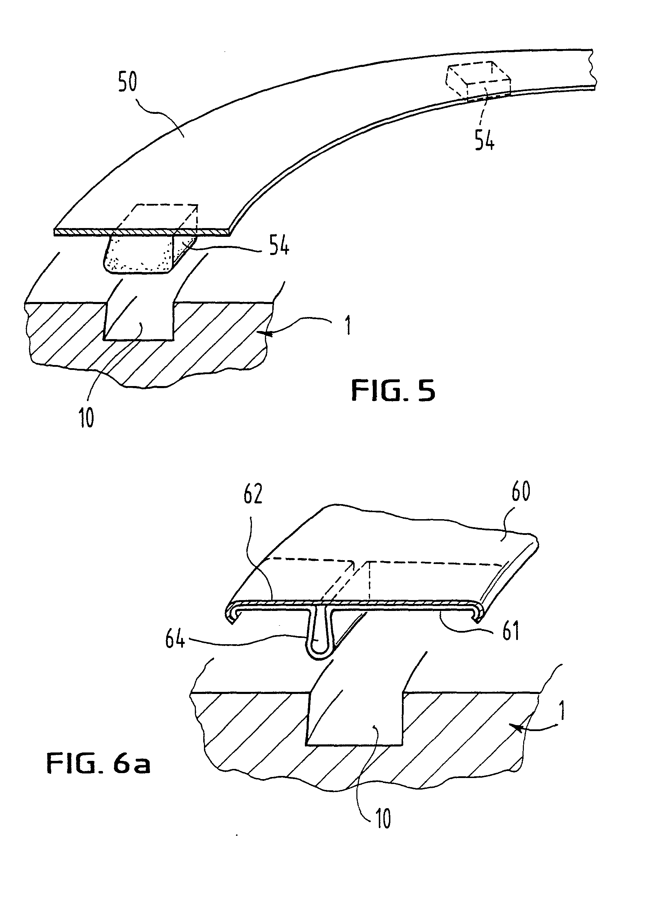

Anstelle der Federbügel 43 nach Fig. 4a und 4b können an der nach innen auf die Felge zu gerichteten Hauptfläche einer ringförmigen Abdeckung 50 Klemmelemente in Form von Formstücken 54 aus Gummi oder einem anderen elastischen Material angebracht sein, wie das in Fig. 5 dargestellt ist. Das Querschnittsprofil dieser Formstücke 54 wird dahingehend gewählt, daß sich die Formstücke gut innerhalb von Bohrungen, Ausnehmungen oder dergleichen festkrallen können, die innerhalb der Radfelge 1 ausgespart sind. Solche Ausnehmungen können eine ununterbrochene, umlaufende Aussparung sein, oder einzelne Bohrungen, die im Abstand zu einander längs eines Kreises im Bereich des Felgenhornes 4 angeordnet sind. Zum lösbaren Festkrallen innerhalb solcher Bohrungen oder Aussparungen können die Formstücke 54 ein an einen Schwalbenschwanz oder Tannenbaum angepaßtes Profil aufweisen. Entsprechend der Ausführungsform nach Fig. 5 weisen diese Formstücke 54 ein das Querschnittsprofil der Nut 10 geringfügig übersteigendes Profil auf, und zum Festklemmen der ringförmigen Abdeckung 50 an der Radfelge 1 werden diese Formstücke 54 unter elastischer Verformung in die Nut 10 hineingedrückt.

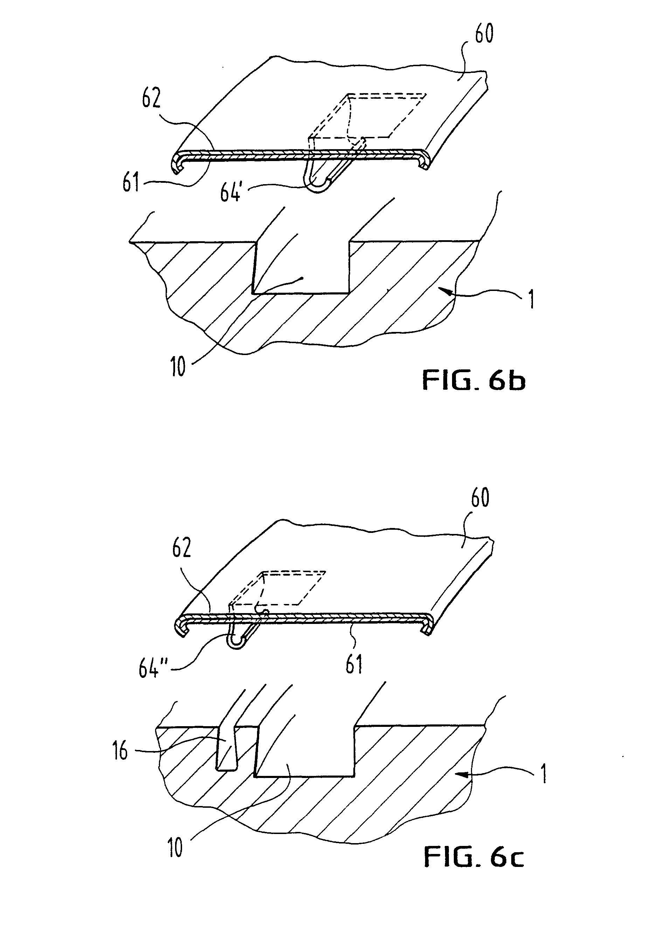

Anstelle zusätzlicher Federbügel oder elastisch verformbarer Formstücke kann eine ringförmige Abdeckung 60, die in diesem Falle zweckmäßigerweise aus dünnen Blech besteht, in regelmäßigen Abständen Stanzfalten 64 oder Ausstanzungen 64', 64" aufweisen, die entweder in die umlaufende Nut 10 oder eine dazu parallele umlaufende Aussparung 16 an der Radfelge 1 eingreifen (vgl. Fig. 6a, 6b und 6c). In einem solchen Falle ist die Abdeckung 60 vorteilhafterweise als zwei oder mehrschichtiges Laminat ausgebildet, und die innere Schicht 61 (oder die inneren Schichten) bilden die Stanzfalten 64 oder die Ausstanzungen 64' bzw. 64". Die innere(n) Schicht(en) 61 ist/sind mit wenigstens einer ununterbrochenen Deckschicht 62 belegt, welche den optisch ansprechenden Eindruck einer Sichtblende gewährleistet.

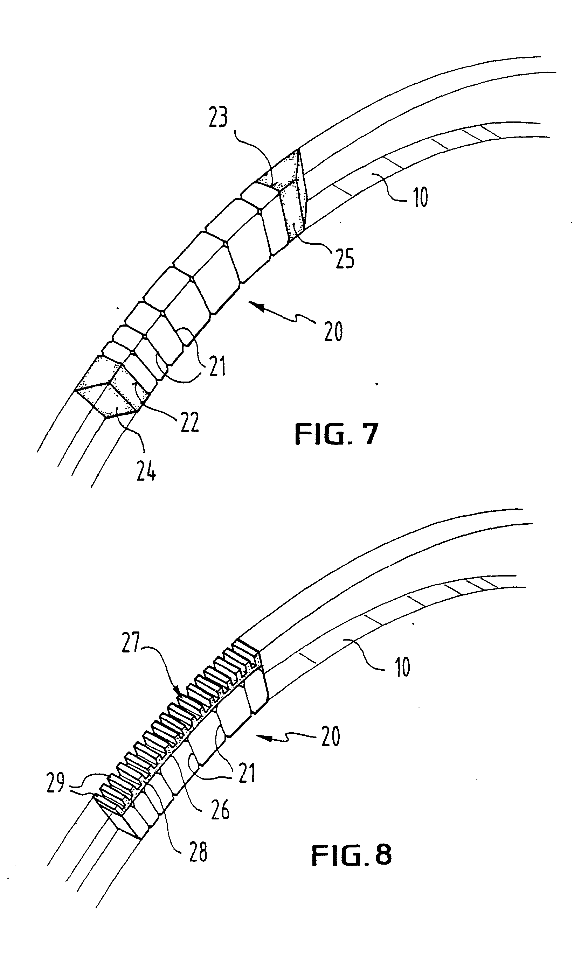

Nach einem weiteren Gesichtspunkt der Erfindung umfaßt das erfindungsgemäße Befestigungssystem angepaßte Ausgleichsgewichte, wie sie beispielsweise in den Fig. 7 und 8 dargestellt sind. Diese Ausgleichsgewichte 20 bestehen in an sich bekannter Weise aus Blei oder einer Bleilegierung und haben die Form von Ringsegmenten mit einem Querschnittsprofil und einem Durchmesser, die so an Durchmesser und Querschnittsprofil der Nut 10 angepaßt sind, daß diese Ringsegmente 20 innerhalb der Nut 10 unterbringbar sind, ohne die Anbringung einer ringförmigen Abdeckung 30, 40, 50 oder 60 zu behindern. Diese Ringsegmente 20 weisen in regelmäßigen Abständen in radialer Richtung verlaufende Sollbruchstellen 21 auf, um miteinander verbundene, unterschiedlich schwere Einzelgewichte zu schaffen. Bei der Ausführungsform nach Fig. 7 sind die Abmessungen der Ringsegmente 20 im wesentlichen an das Profil der Nut 10 angepaßt, so daß diese Ringsegmente 20 weitgehend spielfrei in die Nut 10 einsetzbar sind. Zur Festlegung der Ringsegmente 20 an bestimmter Stelle innerhalb der Nut 10 sind zusätzlich Klötzchen 24 und 25 vorgesehen, die aus einem elastischem Werkstoff wie Gummi oder einem anderen elastischen Kunststoff bestehen und Querschnittsabmessungen aufweisen, die das Profil der Nut 10 geringfügig übersteigen. Unter elastischer Verformung werden diese Gummiklötzchen 24 und 25 benachbart zu den beiden Stirnflächen 22 und 23 der Ringsegmente 20 in die Nut 10 gedrückt und halten daraufhin das Ringsegment 20 dauerhaft an der vorgesehenen Stelle.

Nach einer alternativen, besonders bevorzugten mit Fig. 8 dargestellten Ausführungsform weisen die ebenfalls mit Sollbruchstellen 21 ausgebildeten Ringsegmente 20 eine geringere Breite als die Nut 10 auf. An einer Umfangswand, vorzugsweise an der äußeren Umfangswand 26 ist ein Reibschlußmaterial 27 angebracht. Dieses Reibschlußmaterial 27 kann aus einem elastisch verformbaren werkstoff wie Gummi oder dergleichen bestehen. Besonders bevorzugt — wie in Fig. 8 dargestellt — besteht dieses Reibschlußmaterial 27 aus einem mit Zähnen oder Zacken 29 versehenen Band 28 aus Gummi oder einem anderen elastischen Kunststoff, das an der Umfangswand 26 des Ringsegmentes 20 angeklebt ist. Beim Eindrücken eines Ringsegmentes 20 in die Nut 10 verformen sich die Zähne oder Zacken 29 des Bandes 28 elastisch und gewährleisten einen dauerhaften, sicheren Klemmsitz des Ausgleichsgewichtes 20 innerhalb der Nut 10 an der vorgesehenen Stelle. Um aus vorgegebenen Ringsegmenten 20 ein Ausgleichsgewicht mit bestimmten

Gewicht zu erhalten, wird das Ringsegment 20 längs einer Sollbruchstelle 21 unterteilt, und das gezackte oder gezahnte Band 28 an dieser Stelle durchgeschnitten.

Wie dargelegt, schafft die Erfindung eine « unsichtbare » Ausgleichsgewicht-Befestigung an einer Radfelge, die mit einer Nut zur Aufnahme angepaßter Ausgleichsgewichte ausgerüstet ist. Die erfindungsgemäß vorgesehenen Ausgleichsgewichte lassen sich in einer solchen Nut leicht auswechselbar an einer bestimmten Stelle festlegen, ohne daß dazu aus der Nut herausführende Befestigungsmittel und/oder irgend eine Beschädigung der Nut erforderlich ist.

## Patentansprüche

1. Ausgleichsgewicht-Befestigung an einem Kraftfahrzeugrad mit einer Radfelge (1) mit Radschüssel (2), Felgenbett (3) und Felgenhorn (4), an der im Bereich des Felgenhorns zwischen Felgenbett und Radschüssel eine umlaufende, nach außen offene Nut (10) zur Aufnahme der Ausgleichsgewichte (20) ausgespart ist, dadurch gekennzeichnet, daß zusätzlich eine ringförmige Abdeckung (30, 40, 50, 60) für die Nut und die gegebenenfalls darin angeordneten Ausgleichsgewichte vorhanden ist, und diese ringförmige Abdeckung über Befestigungsmittel (34, 44, 54, 64, 64', 65") lösbar an der Radfelge festklemmbar ist.

2. Ausgleichsgewicht-Befestigung nach Anspruch 1, dadurch gekennzeichnet, daß das oder die Befestigungsmittel (34) am Innen- oder Außenumfang der ringförmigen Abdeckung (30) angebracht ist/sind, und im Bereich des Felgenhorns (4) eine umlaufende Ausnehmung (6) zum Eingriff der/des Befestigungsmittel(s) ausgespart ist.

3. Ausgleichsgewicht-Befestigung nach Anspruch 2 dadurch gekennzeichnet, daß am Innen- oder Außenumfang der ringförmigen Abdeckung (30) einstückig ein umlaufender Flansch (33) angeformt ist, und als Befestigungsmittel ein von der Innenseite dieses Flansches vorstehender, umlaufender Vorsprung (34) oder mehrere im Abstand zueinander angeordnete Vorsprungsabschnitte dienen.

4. Ausgleichsgewicht-Befestigung für ein Kraftfahrzeugrad mit einer Leichtmetall-Zierfelge mit flachem Felgenhorn nach einem der Ansprüche 1 bis 3, dadurch gekennzeichnet, daß die ringförmige Abdeckung (30) ein winkelförmiges Querschnittsprofil aufweist, mit einem relativ breiten, die Nut (10) abdeckenden, sich in radialer Richtung erstreckenden, ersten Schenkel (31) und mit einem relativ schmalen, am Innen- oder Außenumfang angeordneten, sich in axialer Richtung erstreckenden, zweiten Schenkel (33) ; und als Befestigungsmittel an der Innenseite dieses zweiten Schenkels (33) ein umlaufender Vorsprung (34) angeformt ist, der — unter elastischer Verformung der Abdeckung — in eine ringförmige Aussparung (6) an der Innen- oder Außenseite des Felgenhorns (4) einzugreifen vermag.

5. Ausgleichsgewicht-Befestigung nach Anspruch 3 oder 4, dadurch gekennzeichnet, daß der umlaufende Vorsprung (34) keilförmigen Querschnitt aufweist.

6. Ausgleichsgewicht-Befestigung nach einem der Ansprüche 2 bis 5, dadurch gekennzeichnet, daß in die ringförmige Ausnehmung (6) ein Dichtungsmittel eingelegt ist.

7. Ausgleichsgewicht-Befestigung nach einem der Ansprüche 4 bis 6, dadurch gekennzeichnet, daß an der zur Ausnehmung entfernten Innenwand (13) der Nut (10) eine umlaufende Stufe (14) ausgespart ist, in welcher ein Randabschnitt (32) des ersten Schenkels (31) abstützbar ist.

8. Ausgleichsgewicht-Befestigung nach Anspruch 1, dadurch gekennzeichnet, daß an der auf die Nut (10) zugerichteten Hauptfläche einer im wesentlichen ebenen ringförmigen Abdeckung (40, 50, 60) über deren Umfang verteilt im Abstand zueinander mehrere Klemmelemente (44, 54, 64, 64', 64") angebracht oder angeformt sind, die an der Radfelge (1) festklemmbar sind.

9. Ausgleichsgewicht-Befestigung nach Anspruch 8, dadurch gekennzeichnet, daß die Klemmelemente als Haft- oder Klemmabschnitt (44) eines Federbügels (43), oder als elastisch verformbare Formkörper (54) oder als Stanzfalten (64) oder als Ausstanzungen (64', 64") ausgebildet sind.

10. Ausgleichsgewicht-Befestigung nach Anspruch 8 oder 9, dadurch gekennzeichnet, daß die ringförmige Abdeckung (60) als zwei- oder mehrschichtiges Laminat ausgebildet ist, und die innere Schicht (61) dieses Laminates als Klemmelemente dienende Stanzfalten (64) oder nach innen geklappte Ausstanzungen (64', 64") aufweist.

11. Ausgleichsgewicht-Befestigung nach einem der Ansprüche 8 bis 10, dadurch gekennzeichnet, daß wenigstens eine Wand der Nut (10), vorzugsweise deren Außenwand (11), eine Hinterschneidung aufweist, und die Klemmelemente (44, 54, 64, 64', 64") angepaßtes Querschnittsprofil aufweisen.

12. Ausgleichsgewicht-Befestigung nach einem der Ansprüche 1 bis 11, dadurch gekennzeichnet, daß die Ringbreite der ringförmigen Abdeckung (30, 40, 50, 60) etwa 12 bis 25 mm beträgt.

13. Ausgleichsgewicht-Befestigung nach einem der Ansprüche 1 bis 12, dadurch gekennzeichnet, daß die ringförmige Abdeckung (30, 40, 50, 60) aus metallischem Material, insbesondere aus dem Material der Radfelge besteht.

14. Befestigungssystem für Ausgleichsgewichte an einem Kraftfahrzeugrad, mit einer, eine umlaufende Nut (10) im Bereich des Felgenhorns (4) zwischen Radschüssel (2) und Felgenbett (3) aufweisenden Radfelge (1) und mit einer angepaßten, ringförmigen Abdeckung (30, 40, 50, 60) für diese Nut nach einem der Ansprüche 1 bis 13, dadurch gekennzeichnet, daß als Ausgleichsgewichte angepaßte Ringsegmente (20) aus Blei oder einer Bleilegierung dienen, deren Durchmesser und Querschnittsprofil an die Nutabmessungen angepaßt sind.

15. Befestigungssystem nach Anspruch 14, dadurch gekennzeichnet, daß diese Ringsegmente (20) in radialer Richtung verlaufende Sollbruchstellen (21) aufweisen.

16. Befestigungssystem nach Anspruch 15, gekennzeichnet durch eine solche Anordnung der Sollbruchstellen (21), daß jedes Ringsegment (20) aus einer Anzahl mehrerer, miteinander verbundener, unterschiedlich schwerer Einzelgewichte besteht.

17. Befestigungssystem nach einem der Ansprüche 14 bis 16, dadurch gekennzeichnet, daß wenigstens an einer Umfangswand der Ringsegmente (20) ein den Reibschluß mit der Nut erhöhendes Material (27) angebracht ist.

18. Befestigungssystem nach Anspruch 17, dadurch gekennzeichnet, daß das Reibschlußmaterial (27) ein mit Zacken oder Zähnen (29) versehenes Band (28) aus Gummi oder einem anderen elastischen Kunststoff ist.

19. Befestigungssystem nach einem der Ansprüche 14 bis 16, dadurch gekennzeichnet, daß die Ringsegmente (20) im wesentlichen spielfrei in die Nut (10) passen, und zur Festlegung der Ringsegmente innerhalb dieser Nut an das Nutprofil angepaßte Klötzchen (24, 25) aus Gummi oder einem anderen elastisch verformbaren Material dienen.

20. Befestigungssystem nach einem der Ansprüche 14 bis 19, dadurch gekennzeichnet, daß die Außenwand (11) der Nut (10) eine Hinterschneidung aufweist ; und das Querschnittsprofil der Außenumfangswand der Ringsegmente (20), des dort angebrachten Reibschlußmaterials (27, 28, 29) und/oder der Klötzchen (24, 25) an diese Hinterschneidung angepaßt ist.

## Claims

1. Mounting means for mounting balance weights on a motor vehicle wheel comprising a wheel rim (1) having wheel nave (2), rim well (3) and rim flange (4), in which in the region of the rim flange intermediate rim well and wheel nave a continuous, outwardly opening groove (10) is formed for accommodating the balance weights (20), characterized in that an annular cover (30, 40, 50, 60) for the groove and the balance weights optionally disposed therein is additionally provided, and said annular cover is adapted to be releasably clamped to the wheel rim via fastening means (34, 44, 54, 64, 64', 64").

2. Balance weight mounting means as claimed in claim 1, characterized in that the fastening means (34) is/are attached to the inner or outer periphery of the annular cover (30), and a continuous recess (6) for engagement .of the fastening means therein is formed in the region of the rim flange (4).

3. Balance weight mounting means as claimed in claim 2, characterized in that a continuous flange (33) is formed integrally with the inner or outer periphery of the annular cover (30), and either a continuous projection (34) extending from the inside of said flange or a plurality of relatively spaced projecting sections serve as fastening means.

4. Balance weight mounting means for a vehicle wheel comprising a light-metal rim having a flat rim flange as claimed in any of the claims 1 to 3, characterized in that the annular cover (30) has angular cross-sectional profile including a relatively wide, radially extending first leg (31) covering the groove (10) and a relatively narrow, axially extending second leg (33) provided on the inner or outer periphery ; and a continuous projection (34) serving as fastening means is formed integrally with the inside of said second leg (33), said projection being adapted to engage in an annular recess (6) on the inner or outer side of the rim flange (4), whereby the cover undergoes elastic deformation.

5. Balance weight mounting means as claimed in claim 3 or claim 4, characterized in that the continuous projection (34) has wedge-like cross-section.

6. Balance weight mounting means as claimed in any of the claims 2 to 5, characterized in that sealing means is inserted into the annular recess (6).

7. Balance weight mounting means as claimed in any of the claims 4 to 6, characterized in that a continuous step (14) is formed on the inner wall (13) of the groove (10) remote from the recess, an edge portion (32) of the first leg (31) being adapted to be supported in said step.

8. Balance weight mounting means as claimed in claim 1, characterized in that a plurality of clamping elements (44, 54, 64, 64', 64") adapted to be clampingly secured to the wheel rim (1) are provided at or formed integrally with the main surface of a substantially flat annular cover (40, 50, 60) in relatively spaced relationship and distributed over the circumference of said cover, said main surface facing the groove (10).

9. Balance weight mounting means as claimed in claim 8, characterized in that the clamping elements are configured as retaining or clamping portion (44) of a spring clip (43) or as elastically deformable formed parts (54) or as punched folds (64) or as punch-outs (64', 64").

10. Balance weight mounting means as claimed in claim 8 or claim 9, characterized in that the annular cover (60) is configured as a dual-layer or multi-layer laminate, and the inner layer (61) of said laminate is provided with punched folds (64) or inwardly turned punch-outs (64', 64") used as clamping elements.

11. Balance weight mounting means as claimed in any of the claims 8 to 10, characterized in that at least one wall of the groove (10), preferably the outer wall (11) thereof, is provided with an undercut, and the clamping elements (44, 54, 64, 64', 64") have a matching cross-sectional profile.

12. Balance weight mounting means as claimed in any of the claims 1 to 11, characterized in that the width of the annular cover (30, 40, 50, 60) is about 12 to 25 mm.

13. Balance weight mounting means as claimed in any of the claims 1 to 12, characterized in that the annular cover (30, 40, 50, 60) is made of metallic material, especially of the material of the wheel rim.

14. Mounting system for mounting balance weights on a motor vehicle wheel, comprising a wheel rim (1) having a continuous groove (10) in the region of the rim flange (4) intermediate wheel nave (2) and rim well (3), and a matching annular cover (30, 40, 50, 60) for said groove as claimed in any of the claims 1 to 13, characterized in that matching annular segments (20) of lead or a lead alloy are used as balance weights, the diameter and cross-sectional profile thereof being matched to the dimensions of the groove.

15. Mounting system as claimed in claim 14, characterized in that said annular segments (20) have predetermined breaking points (21) extending in radial direction.

16. Mounting system as claimed in claim 15, characterized by such an arrangement of the predetermined breaking points (21) that each annular segment (20) is composed of a number of several interconnected individual weights of different weight.

17. Mounting system as claimed in any of the claims 14 to 16, characterized in that a material (27) for increasing the frictional engagement with the groove is provided on at least one peripheral wall of the annular segments (20).

18. Mounting system as claimed in claim 17, characterized in that the friction material (27) is a tape (28) of rubber or another elastic plastics material provided with serrations or teeth (29).

19. Mounting system as claimed in any of the claims 14 to 16, characterized in that the annular segments (20) fit into the groove (10) substantially without play, and that small pads (24, 25) of rubber or another elastically deformable material adapted to the groove profile are used to secure the annular segments inside said groove.

20. Mounting system as claimed in any of the claims 14 to 19, characterized in that the outer wall (11) of the groove (10) is provided with an undercut ; and the cross-sectional profile of the outer peripheral wall of the annular segments, of the friction material (27, 28, 29) disposed thereat, and/or of the small pads (24, 25) is matched to said undercut.

**Revendications**

1. Fixation de masses d'équilibrage sur une roue de véhicule, cette roue comportant une jante (1) qui comprend un voile de roue (2), une base de jante (3) et un rebord de jante (4) dans laquelle est ménagée, dans la région du rebord, entre la base de la jante et le voile de la roue, une rainure périphérique (10) ouverte vers l'extérieur et destinée à recevoir les masses d'équilibrage (20), caractérisée en ce qu'il est en outre prévu un couvercle annulaire (30, 40, 50, 60) pour recouvrir la rainure et les masses d'équilibrage disposées le cas échéant dans celle-ci, et en ce que ce couvercle annulaire peut être bloqué de façon amovible, par l'intermédiaire de moyens de fixation (34, 44, 54, 64, 64', 64''), sur la jante de roue.

2. Fixation de masses d'équilibrage conforme à la revendication 1, caractérisée en ce que le (ou les) moyen(s) de fixation (34) est (ou sont) raccordé(s) à la périphérie intérieure ou extérieure du couvercle annulaire (30), et en ce que dans la région du rebord (4) de la jante est ménagé un évidement périphérique (6) avec lequel le (ou les) moyen(s) de fixation peut(vent) se mettre en prise.

3. Fixation de masses d'équilibrage conforme à la revendication 2, caractérisée en ce qu'une aile périphérique (33), d'une seule pièce avec le couvercle annulaire (30), est ménagée à la périphérie intérieure ou extérieure de celui-ci, et en ce qu'une saillie périphérique (34) dépassant de la face intérieure de cette aile, ou plusieurs tronçons saillants disposés à distance les uns des autres servent de moyen(s) de fixation.

4. Fixation de masses d'équilibrage sur une roue de véhicule, cette roue comportant une jante fantaisie en métal léger à rebord de jante plat, cette fixation étant conforme à l'une des revendications 1 à 3, caractérisée en ce que le couvercle annulaire (30) présente en coupe transversale un profil de cornière comportant une première aile relativement large (31), qui s'étend radialement et recouvre la rainure (10), et une seconde aile relativement étroite (33) qui s'étend en direction axiale et est disposée à la périphérie intérieure ou extérieure, et en ce qu'une saillie périphérique (34) faisant office de moyens de fixation est formée sur la face intérieure de cette seconde aile (33) et peut s'encliqueter, par déformation élastique du couvercle, dans un évidement annulaire (6) ménagé sur la face intérieure ou extérieure du rebord (4) de la jante.

5. Fixation de masses d'équilibrage conforme à l'une des revendications 3 ou 4, caractérisée en ce que la saillie périphérique (34) présente une section transversale en forme de coin.

6. Fixation de masses d'équilibrage conforme à l'une des revendications 2 à 5, caractérisée en ce qu'un moyen d'étanchéité est inséré dans l'évidement annulaire (6).

7. Fixation de masses d'équilibrage conforme à l'une des revendications 4 à 6, caractérisée en ce qu'un gradin périphérique (14) est creusé dans la paroi intérieure (13), éloignée de l'évidement, de la rainure (10), une région de bord (32) de la première aile (31) pouvant s'appuyer sur ce gradin (14).

8. Fixation de masses d'équilibrage conforme à la revendication 1, caractérisée en ce que plusieurs éléments de pincement (44, 54, 64, 64', 64''), qui peuvent être bloqués sur la jante (1) de la roue, sont ménagés ou formés sur la surface principale, tournée vers la rainure (10), d'un couvercle annulaire (40, 50, 60) sensiblement plat, en étant répartis à distance l'un de l'autre sur le pourtour de ce couvercle.

9. Fixation de masses d'équilibrage conforme à la revendication 8, caractérisée en ce que les éléments de pincement sont des tronçons de fixation ou de pincement (44) d'un étrier élastique (43), ou des corps de forme (54) élastiquement déformables, ou des plis matricés (64) ou des éléments découpés par matriçage (64', 64'').

10. Fixation de masses d'équilibrage conforme à l'une des revendications 8 ou 9, caractérisée en ce que le couvercle annulaire (60) est un stratifié à deux ou plusieurs couches, et en ce que la couche intérieure (61) de ce stratifié présente des plis matricés (64) ou des éléments découpés par matriçage (64', 64'') et rabattus vers l'intérieur, qui font office d'éléments de pincement.

11. Fixation de masses d'équilibrage conforme à l'une des revendications 8 à 10, caractérisée en ce qu'au moins une paroi de la rainure (10), de préférence la paroi extérieure (11) de celle-ci, présente une contre-dépouille, et en ce que les éléments de pincement (44, 54, 64, 64', 64'') présentent en coupe transversale un profil conjugué.

12. Fixation de masses d'équilibrage conforme à l'une des revendications 1 à 11, caractérisée en ce que la largeur radiale du couvercle annulaire (30, 40, 50, 60) est d'environ 12 à 25 mm.

13. Fixation de masses d'équilibrage conforme à l'une des revendications 1 à 12, caractérisée en ce que le couvercle annulaire (30, 40, 50, 60) est un matériau métallique, en particulier le même matériau que la jante de la roue.

14. Système de fixation de masses d'équilibrage sur une roue de véhicule, cette roue comportant une jante (1) de roue qui présente une rainure périphérique (10) dans la région du rebord (4) de la jante entre le voile (2) de la roue et la base (3) de la jante, et un couvercle annulaire conjugué (30, 40, 50, 60) pour la rainure, selon l'une des revendications 1 à 13, caractérisé en ce que des segments annulaires (20) appropriés en plomb ou en alliage de plomb servent de masses d'équilibrage, le diamètre et le profil en coupe transversale de ces segments étant adaptés aux dimensions de la rainure.

15. Système de fixation de masses d'équilibrage sur une roue de véhicule conforme à la revendication 14, caractérisé en ce que ces segments annulaires (20) présentent des points de rupture préférentielle (21) s'étendant en direction radiale.

16. Système de fixation de masses d'équilibrage sur une roue de véhicule conforme à la revendication 15, caractérisé en ce que les points de rupture préférentielle (21) sont ainsi agencés que chaque segment annulaire (20) se compose d'un certain nombre de masses individuelles reliées les unes aux autres et de poids différent.

17. Système de fixation conforme à l'une des revendications 14 à 16, caractérisé en ce qu'un matériau (27) améliorant la liaison par adhérence avec la rainure est prévu sur au moins une paroi périphérique des segments annulaires (20).

18. Système de fixation conforme à la revendication 17, caractérisé en ce que le matériau de liaison par adhérence (27) est une bande (28) en caoutchouc ou autre matière plastique élastique, munie de pointes ou de dents (29).

19. Système de fixation conforme à l'une des revendications 14 à 16, caractérisé en ce que les segments annulaires (20) s'appliquent sensiblement sans jeu dans la rainure (10), et en ce que des petites cales (24, 25), en caoutchouc ou autre matière élastiquement déformable, adaptées au profil de la rainure, servent pour fixer les segments annulaires à l'intérieur de cette rainure.

20. Système de fixation conforme à l'une des revendications 14 à 19, caractérisé en ce que la paroi extérieure (11) de la rainure (10) présente une contre-dépouille, et en ce que le profil en coupe transversale de la paroi périphérique extérieure des segments annulaires (20), du matériau de liaison par adhérence (27, 28, 29) fixé à cette paroi et/ou des petites cales (24, 25) est adapté à cette contre-dépouille.

FIG. 1

FIG. 2

FIG. 3

FIG. 4a

FIG. 4b

FIG. 5

FIG. 6a

FIG. 6b

FIG. 6c

FIG. 7

FIG. 8